# EUROPÄISCHE PATENTANMELDUNG

(11) **EP 0 773 379 A1**
(43) Veröffentlichungstag der Anmeldung: **14.05.1997**
(21) Anmeldenummer: 96117034.7
(22) Anmeldetag: 24.10.1996
(51) Int. Cl.: F16D 3/41

(54) **Dichtungsanordnung für ein Zapfenkreuz**

(30) Priorität: 11.11.1995 DE 19542100
(71) Anmelder: GKN Walterscheid GmbH, D-53797 Lohmar (DE)
(72) Erfinder: Herchenbach, Paul, 53809 Ruppichteroth (DE); Kretschmer, Horst, Dipl.-Ing., 51145 Köln (DE)
(74) Vertreter: Harwardt, Günther

(57) **Zusammenfassung**

Die Erfindung betrifft eine Dichtungsanordnung für das Zapfenkreuz (4) eines Kreuzgelenkes (1), welche drehfest mit dem Zapfen (5) verbunden ist und hierzu auf einer Sitzfläche (15) aufsitzt. Die Dichtung (16) weist zwei Abschnitte (17,28) auf, von denen der erste Abschnitt (17) durch eine Ringausnehmung (21) in einen Dichtabschnitt (18) und einen Befestigungsabschnitt (22) geteilt ist. Der zweite Abschnitt (28) umgreift die offene Stirnseite (12) der Lagerbüchse (8) und liegt mit einer Dichtlippe (30) auf deren Außenfläche (29) an. Durch die beschriebenen Maßnahmen wird erreicht, daß die Vorspannung bezüglich der Befestigung der Dichtung (16) auf dem Zapfen (5) und die Vorspannung der Dichtlippen (19) zur Dichtfläche (20) unabhängig voneinander konstruktiv ausgelegt werden können.

## Beschreibung

Die Erfindung betrifft eine Dichtungsanordnung für die drehbare Lagerung der Zapfen eines Zapfenkreuzes von Kreuzgelenken um die jeweils zugehörige Zapfenachse, mit einer Dichtung, die einen ersten Abschnitt aufweist, der im Ringraum zwischen einer Sitzfläche für den ersten Abschnitt und einer an der Innenseite einer einen Zapfen lagernden Lagerbüchse angebrachten Dichtfläche angeordnet ist und auf der Sitzfläche fest aufsitzt, und einem zweiten Abschnitt, der ausgehend vom ersten Abschitt den Rand der offenen Stirnseite der Lagerbüchse umgreift und an der Außenfläche der Lagerbüchse zur Abdichtung anliegt.

Eine solche Dichtungsanordnung ist in der DE 25 56 769 B1 beschrieben. Der Nachteil bei einer solcher Anordnung ist, daß die eindeutige Zuordnung und damit der feste Sitz der Dichtung auf dem Zapfenkreuz nur durch eine bestimmte Querschnittsgestaltung erzielt werden kann, die jedoch gleichzeitig zu höheren als der ggfs. gewünschten Vorspannung für die Dichtlippen an der Dichtfläche der Lagerbüchse führt.

Der Erfindung liegt die Aufgabe zugrunde, eine Dichtungsanordnung zu schaffen, bei der die Dichtfunktion und die Einspannfunktion der Dichtung unabhängig voneinander auslegbar sind.

Diese Aufgabe wird erfindungsgemäß dadurch gelöst, daß der erste Abschnitt der Dichtung eine Ringausnehmung aufweist, daß die Ringausnehmung von der der offenen Stirnseite der Lagerbüchse abgewandten Stirnfläche des ersten Abschnittes ausgeht und sich zumindest über einen Teil dessen Länge erstreckt und daß die Ringausnehmung den ersten Abschnitt der Dichtung in einen bezogen auf die Zapfenachse radial äußeren ringförmigen Dichtabschnitt mit mindestens einer zur Anlage an der Dichtfläche der Lagerbüchse bestimmten Dichtlippe und in einen bezogen auf die Zapfenachse radial inneren ringförmigen Befestigungsabschnitt, der zur Festlegung auf der Sitzfläche des Zapfens bestimmt ist, teilt.

Von Vorteil bei dieser Ausbildung ist, daß der Befestigungsabschnitt hinsichtlich der Materialstärke und Auslegung der Bohrung und Vorspannung so ausgelegt werden kann, daß ein fester Sitz auf dem Zapfen gegeben ist. Ebenso kann der Dichtungsabschnitt so ausgelegt werden, daß nur die gewünschte Vorspannung erzielt wird, um einem erhöhten Verschleiß der Dichtlippen entgegenzuwirken und somit auf eine lange Dauer eine gute Abdichtung zu gewährleisten.

Ein Vorteil aus der festen Zuordnung der Dichtung zu dem Zapfen ist ferner, daß ein geringerer Verschleiß an den Dichtlippen beim Abdichten gegenüber der Lagerbüchse gegeben ist, denn üblicherweise werden Lagerbüchsen durch spanlose Umformung hergestellt. Dabei entstehen Oberflächen, die glatter sind als solche, die durch spanende Bearbeitung hergestellt werden, was üblicher Weise bei der Zapfenaußenfläche der Fall ist.

Vorzugsweise ist auch dem zweiten Abschnitt, der als eine Art Vordichtung dient, mindestens eine Dichtlippe zugeordnet, die auf der Außenfläche der Lagerbüchse mit Vorspannung anliegt. Hierdurch wird eine Labyrinthdichtung geschaffen, die dafür Sorge trägt, daß von außen kein Schmutz oder keine Feuchtigkeit in den Bereich der Lagerbüchse eindringen kann, in dem die Nadeln angeordnet sind. Darüber hinaus werden die Dichtlippen, die an der in der Lagerbüchse vorgesehenen Dichtfläche anliegen, gegen Einflüsse von außen geschützt. Um auch Axialkräfte, die beispielsweise von den Lagernadeln auf die Dichtung um die zwischengeschaltete Anlaufscheibe ausgeübt werden, gut aufnehmen zu können, ist der zweite Abschnitt der Dichtung in Richtung zur Drehachse des Zapfenkreuzes gegen eine Schulter des zugehörigen Zapfens abgestützt.

Um die Bindung zwischen Zapfen und Dichtung noch weiter zu verbessern, d.h. eine drehfeste Verbindung zu erzielen, ist in Ausgestaltung der Erfindung vorgesehen, daß die Schulter um die Zapfenachse verteilte Ausnehmungen aufweist und die Dichtung zum Eingriff in die Ausnehmungen bestimmte und angeformte Vorsprünge aufweist. Eine besonders günstige Ausgestaltung der Dichtlippe ergibt sich, wenn diese im Querschnitt ein Dreieck bilden und dessen Spitze zur Anlage an der jeweils gegenüberliegenden Fläche dient.

Um bei der vorgesehenen Anordnung eine Nachschmierung erzielen zu können, ist es erforderlich, daß beim Einpressen von neuem Schmiermittel das alte Schmiermittel entweichen kann. Ansonsten würde die Dichtung beschädigt. Hierzu ist vorgesehen, daß der Befestigungsabschnitt in seiner Bohrung, mit der er auf der Sitzfläche des Zapfens aufsitzt, mit mindestens einem parallel zur Zapfenachse verlaufenden Kanal versehen ist.

Der Kanal mündet in die freie Umgebung und ist vorzugsweise durch einen Verschluß, beispielsweise in Form einer Lippe oder Klappe oder eines sich an die Außenfläche des Zapfenkreuzes anlegenden Lappens der an die Dichtung angeformt ist, verschlossen. Dabei ist ergänzend vorgesehen, daß dem Kanal ein bei Überschreiten eines bestimmten Abschmierdruckes öffnender Verschluß zugeordnet ist. Hierdurch wird gewährleistet, daß Schmiermittel nicht ungewollt austreten kann und darüber hinaus aber auch kein Schmutz von außen eindringen kann.

Vorzusweise ist die Dichtung als Spritzgußteil gestaltet. Als Werkstoff für die Dichtung hat sich beispielsweise ein thermoplastisches Polyester (PBTP) als besonders zweckmäßig erwiesen.

Ein bevorzugtes Ausführungsbeispiel der Erfindung ist in der Zeichnung schematisch dargestellt.

Es zeigt
- Figur 1: ein Kreuzgelenk in der gestreckten Lage in der Seitenansicht,
- Figur 2: einen Schnitt II-II gemäß Figur 1, jedoch nur durch einen Gabelarm einer Gelenkgabel,
- Figur 3: das Detail Z gemäß Figur 2 bezüglich der Ausbildung der Dichtung in vergrößertem Maßstab und
- Figur 4: einen Schnitt vergleichbar zu Figur 3, jedoch durch einen Bereich, in dem Ausnehmungen angeordnet sind, in die Vorsprünge der Dichtung eingreifen.

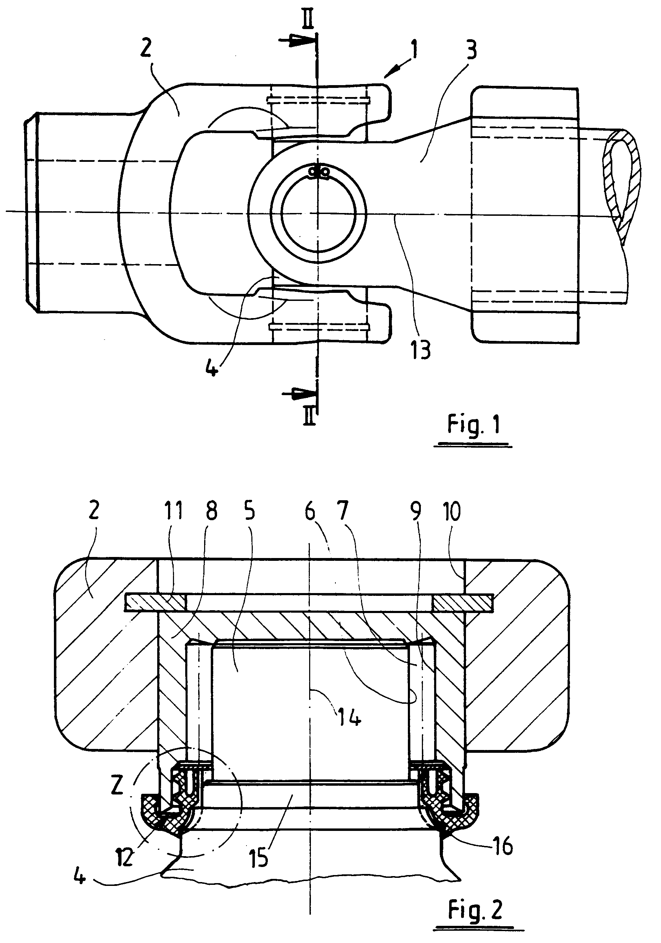

Figur 1 zeigt das Kreuzgelenk 1 mit den beiden Gelenkgabeln 2,3, die jeweils zwei Gabelarme umfassen und die durch ein Zapfenkreuz 4 mit vier rechtwinklig in einer Ebene zueinander stehenden Zapfen 5 verbunden sind. In der gestreckten Lage sind die beiden Gelenkgabeln 2,3 um die Drehachse 13 drehbar, wobei auch das Zapfenkreuz 4 um diese Achse rotiert.

Wie aus Figur 2 zu entnehmen ist, sind auf der Außenfläche 6 des Zapfens 5 Nadeln 7 in einem Kranz um den Zapfen 5 herum angeordnet. Sie stützen sich an der Wandung der Lagerbohrung 9 der Lagerbüchse 8 in radialer Richtung ab. Die Lagerbüchse 8 wiederum ist in der Aufnahmebohrung 10 des Gabelarmes der Gelenkgabel 2 angeordnet und in dieser gegen radiale Verstellung durch einen Sicherungsring 11 gesichtert, der gegen den Boden der Lagerbüchse 8 anliegt. Zu der offenen Stirnseite 12 der Lagerbüchse 8 hin ist in dem Ringraum zwischen dem Zapfen 5 und der Lagerbüchse 8 eine Dichtung 16 auf der Sitzfläche 15 des Zapfens 5 festsitzend angeordnet.

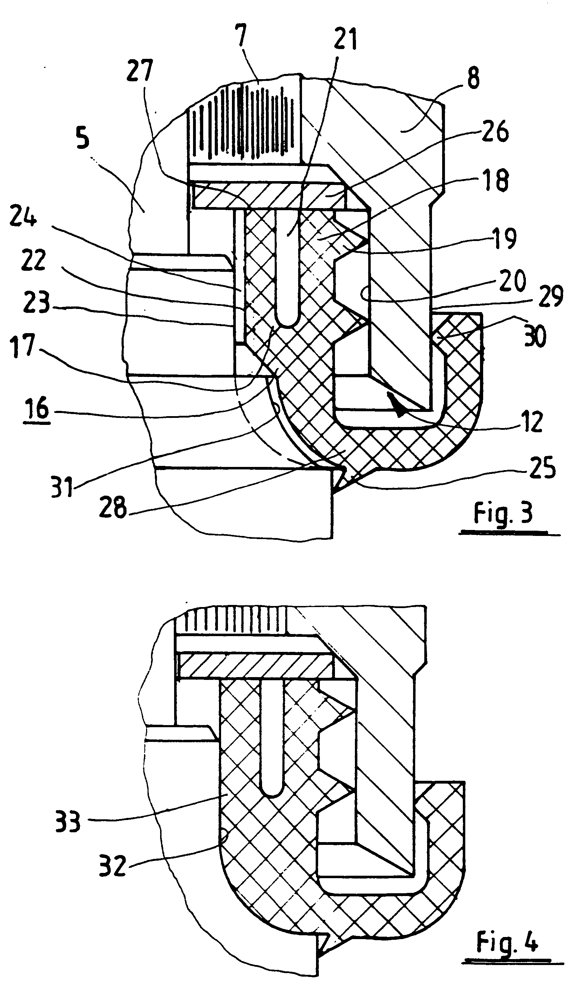

Die Dichtung 16 ist nachfolgend anhand der Figuren 3 und 4 näher beschrieben. Die Dichtung 16 ist ein Spritzgußteil aus einem thermoplastischen Polyester, das einen ersten Abschnitt 17 besitzt, der in zwei Abschnitte unterteilt ist. Hierzu ist ausgehend von der Stirnfläche 27 eine Ringausnehmung 21 vorhanden, die sich im wesentlichen über die Länge des ersten Abschnittes 17 erstreckt und dadurch diesen in zwei Ringabschnitte unterteilt wird, von denen der radial außenliegende ringförmige Abschnitt den Dichtabschnitt 18 bildet, auf dessen Außenfläche umlaufend Dichtlippen 19, die im Querschnitt Dreieckform aufweisen, angebracht sind. Diese liegen mit ihren Spitzen gegen die Dichtfläche 20 der Lagerbüchse 8 mit Vorspannung an. Radial innen ist der ringförmige Befestigungsabschnitt 22 durch die Ringausnehmung 21 gebildet, der mit seiner Bohrung 23 auf der Sitzfläche 15 des Zapfens 5 mit Reibschluß aufgenommen ist. Dabei ist die radiale Stärke des Befestigungsabschnittes so gewählt, daß ein fester Sitz gegeben ist. Zusätzlich ist von der Bohrung ausgehend ein entlang derselben und weiter bis zur freien Umgebung sich erstreckender Kanal 24 vorgesehen. Dieser ist also bis in den zweiten Abschnitt 28 der Dichtung 16 weitergeführt und durch einen Verschluß in Form einer auf der Außenfläche des Zapfenkreuzes 4 anliegenden Zunge 25 nach außen abgedichtet. Gegen die Stirnfläche 27 liegt eine Anlaufscheibe 26 an, gegen welche die Nadeln 7 ggfs. anstoßen können. Die Anlaufscheibe 26 definiert einen Spalt der einen Durchtritt von Schmiermittel zum Kanal 24 erlaubt. Der zweite Abschnitt 28 der Dichtung 16 ist an einer kurvenförmig verlaufenden Schulter 31 der Verlängerung des Zapfens 5 zum Zapfenkreuzkörper hin, d.h. in Richtung auf die Drehachse hin abgestützt. Er ist so nach außen geführt, daß ein weiterer Wandungsabschnitt etwa parallel zur Wandung der Lagerbüchse 8 verläuft und diese von der offenen Stirnseite 12 her umgreift und auf der Außenfläche 29 der Lagerbüchse 8 mit einer Dichtlippe 30 mit Vorspannung anliegt. Zusätzlich sind, wie insbesondere aus Figur 4 ersichtlich, umfangsverteilt um die Drehachse 14 in der Schulter 31 Ausnehmungen 32 vorgesehen, in welche dem zweiten Abschnitt 28 der Dichtung 16 angeformte Vorsprünge 33 zum Eingriff kommen und damit in Drehrichtung um die Zapfenachse 14 eine besonders feste Verbindung erzielen.

Die Dichtung ist so gestaltet, daß sie normalerweise unter dem anstehenden Druck im Innenraum der Lagerung schließt, d.h. die Dichtlippen 19 an die Dichtfläche 20 anpreßt. Ein Öffnen tritt erst dann ein, wenn der wesentlich höhere Abschmierdruck anliegt.

### Bezugszeichenliste

- 1: Kreuzgelenk
- 2,3: Gelenkgabel
- 4: Zapfenkreuz
- 5: Zapfen
- 6: Außenfläche des Zapfens
- 7: Nadeln
- 8: Lagerbüchse
- 9: Lagerbohrung
- 10: Aufnahmebohrung
- 11: Sicherungsring
- 12: offene Stirnseite
- 13: Drehachse
- 14: Zapfenachse
- 15: Sitzfläche
- 16: Dichtung
- 17: erster Abschnitt
- 18: Dichtabschnitt
- 19: Dichtlippe
- 20: Dichtfläche
- 21: Ringausnehmung
- 22: Befestigungsabschnitt
- 23: Bohrung
- 24: Kanal
- 25: Verschluß
- 26: Anlaufscheibe
- 27: Stirnfläche
- 28: zweiter Abschnitt
- 29: Außenfläche
- 30: Dichtlippe
- 31: Schulter
- 32: Ausnehmung
- 33: Vorsprung

## Patentansprüche

1. Dichtungsanordnung für die drehbare Lagerung der Zapfen (5) eines Zapfenkreuzes (4) von Kreuzgelenken (1) um die jeweils zugehörige Zapfenachse (14), mit einer Dichtung (16), die einen ersten Abschnitt (17) aufweist, der im Ringraum zwischen einer Sitzfläche (15) für den ersten Abschnitt (17) und einer an der Innenseite einer einen Zapfen (5) lagernden Lagerbüchse (8) angebrachten Dichtfläche (20) angeordnet ist und auf der Sitzfläche (15) fest aufsitzt, und einem zweiten Abschnitt (28), der ausgehend vom ersten Abschitt (17) den Rand der offenen Stirnseite (12) der Lagerbüchse (8) umgreift und an der Außenfläche (29) der Lagerbüchse (8) zur Abdichtung anliegt,
dadurch gekennzeichnet,
daß der erste Abschnitt (17) der Dichtung (16) eine Ringausnehmung (21) aufweist, daß die Ringausnehmung (21) von der der offenen Stirnseite (12) der Lagerbüchse (8) abgewandten Stirnfläche (27) des ersten Abschnittes (17) ausgeht und sich zumindest über einen Teil dessen Länge erstreckt und daß die Ringausnehmung (21) den ersten Abschnitt (17) der Dichtung (16) in einen bezogen auf die Zapfenachse (14) radial äußeren ringförmigen Dichtabschnitt (18) mit mindestens einer zur Anlage an der Dichtfläche (20) der Lagerbüchse (8) bestimmten Dichtlippe (19) und in einen bezogen auf die Zapfenachse (14) radial inneren ringförmigen Befestigungsabschnitt (22), der zur Festlegung auf der Sitzfläche (15) des Zapfens (5) bestimmt ist, teilt.

2. Dichtungsanordnung nach Anspruch 1,
dadurch gekennzeichnet,
daß der zweite Abschnitt (28) zu der Dichtung (16) mindestens eine von seiner Innenfläche nach innen zur Zapfenachse (14) vorstehende Dichtlippe (30) aufweist, die auf der Außenfläche (29) der Lagerbüchse (8) zur Abdichtung mit Vorspannung anliegt.

3. Dichtungsanordnung nach einem der Ansprüche 1 oder 2,
dadurch gekennzeichnet,
daß der zweite Abschnitt (28) der Dichtung (16) sich in Richtung zur Drehachse (14) des Zapfenkreuzes (4) gegen eine Schulter (31) des zugehörigen Zapfens (5) abstützt.

4. Dichtungsanordnung nach Anspruch 3,
dadurch gekennzeichnet,
daß die Schulter (31) um die Zapfenachse (14) verteilte Ausnehmungen (32) aufweist und die Dichtung (16) zum Eingriff in die Ausnehmungen (32) bestimmte und angeformte Vorsprünge (33) aufweist.

5. Dichtungsanordnung nach einem der Ansprüche 1 oder 2,
dadurch gekennzeichnet,
daß die Dichtlippen (19,30) im Querschnitt ein Dreieck bilden, dessen Spitze zur Anlage an der jeweils gegenüberliegenden Fläche bestimmt ist.

6. Dichtungsanordnung nach Anspruch 1,
dadurch gekennzeichnet,
daß der Befestigungsabschnitt (22) in seiner Bohrung (23), mit der er auf der Sitzfläche (15) des Zapfens (5) aufsitzt, mit mindestens einem parallel zur Zapfenachse (14) verlaufenden Kanal (24) versehen ist.

7. Dichtungsanordnung nach Anspruch 6,
dadurch gekennzeichnet,
daß dem Kanal (24) ein bei Überschreiten eines bestimmten Abschmierdruckes öffnender Verschluß (25) zugeordnet ist.

8. Dichtungsanordnung nach einem der Ansprüche 1 bis 7,
dadurch gekennzeichnet,
daß die Dichtung (16) ein Spritzgußteil ist, das aus einem thermoplastischen Polyester (PBTP) hergestellt ist.
